# EUROPEAN PATENT SPECIFICATION

(11) **EP 1 134 649 B1**
(45) Date of publication and mention of the grant of the patent: **24.08.2011**
(21) Application number: 01105493.9
(22) Date of filing: 15.03.2001
(51) Int. Cl.: G06F 3/12

(54) **Communication terminal device, method of processing data received by same, and computer program product for achieving the method**
Kommunikationsendgerät, Verarbeitungsverfahren für Daten die durch dasselbe empfangen wurden sowie Rechnerprogrammerzeugnis und Verfahren für Archivierung
Dispositif de terminal de communication, méthode de traitement de données reçues par un tel dispositif, et produit de logiciel d'ordinateur pour exécuter une telle méthode

(30) Priority: 17.03.2000 JP 2000077110
(43) Date of publication of application: 19.09.2001
(73) Proprietor: Seiko Epson Corporation, Shinjuku-ku Tokyo 163-0811 (JP)
(72) Inventor: Miyasaka, Masayo, Suwa-shi, Nagano-ken 392-8502 (JP); Koike, Toshiaki, Suwa-shi, Nagano-ken 392-8502 (JP); Mochizuki, Hidetake, Suwa-shi, Nagano-ken 392-8502 (JP)
(74) Representative: MERH-IP Matias Erny Reichl Hoffmann

(56) References cited:
- EP-A- 0 769 755
- EP-A- 0 917 093

## Description

The present invention relates to a communication terminal device such as a terminal printer, terminal display, deposit terminal, or similar device used, for example, in transaction devices. More particularly, the present invention relates to processing of received data temporarily stored in a receive buffer when the communication terminal device stops its proper operation because of a predetermined condition such as an off-line state.

Conventional transaction devices such as an automated transaction machine (ATM), a cash dispenser (CD), a POS system, and a kiosk terminal installed in a retail store, contain a central processing device (such as a personal computer or host terminal) and various terminal devices providing specific functions. Exemplary of these terminal devices are printers, displays, cash dispensing and storage devices, and bar code readers. The central processing device, referred to as the host below, systematically controls the overall operation of the transaction device, and also controls of the individual terminal devices built into the transaction device. More specifically, the host sends control commands and other relevant data to a particular terminal device to control the operation of the terminal device. Most such terminal devices are connected to the host by way of a serial port (RS-232C or other) connection whereby commands and process data such as print data are transferred.

An interface circuit is built into each of these devices, and a control line for controlling communication is provided in the connection. For example, the terminal device can output a data terminal ready (DTR) signal to notify the host that the terminal device is in a data receivable state. When the host detects an active DTR signal, it sets the data set ready (DSR) signal to an active state to confirm that both devices are enabled for data communication before sending any data, and thereby prevents data loss. Terminal devices such as those mentioned above are referred to below as "CTD" (Communication Terminal Device).

Conventionally, a CTD such as a terminal printer (simply referred to as printer below) stores data received from the host in a receive buffer. The stored received data is interpreted by a command interpreter in the FIFO (first-in-first-out) sequence. After the data has been interpreted it is removed from the receive buffer to make space in the receive buffer. If the interpreted data is a command, the command is executed and then deleted from the receive buffer.

If the CTD goes off-line because some reason, such as an open cover, a paper jam or the like, has caused the terminal device to stop its proper operation, the command interpreter also stops interpreting the received data and thus stops operation. If the host continues to send data when the CTD is off-line, the receive buffer soon becomes full (a receive buffer full state) because processing of data in the receive buffer has stopped.

When the receive buffer becomes full, data received thereafter can no longer be stored in the receive buffer and could be lost. To prevent this, the CTD sets the DTR signal inactive when the receive buffer becomes full, and thus stops data transmission from the host.

On the other hand, when the CTD goes off-line, the host needs to confirm the CTD status to run a process appropriate to that status. The host must therefore send a control command to the CTD, which is in the off-line state, causing the CTD to perform a specific operation such as reporting the device status to the host. Some CTDs accomplish this by providing a special type of command, referred to below as real-time commands. A real-time command is executed as soon as the command is received by the CTD and is then stored in the receive buffer. The real-time command is stored in the receive buffer after execution to prevent the loss of binary data when the code sequence mistakenly processed as a real-time command is actually part of the binary data sequence of an image data stream, for example. Real-time commands are known and described in EP-A-0 769 737 for instance.

When the CTD goes off-line, the host typically sends real-time commands to the CTD frequently in order to determine the status of the CTD in detail. These real-time commands are executed as soon as received by the CTD and are then stored in the receive buffer as mentioned before.

On the other because the command interpreter does not interpret data stored in the receive buffer while the CTD is off-line, the receive buffer soon becomes filled with the real-time commands sent from the host and/or other unprocessed data previously stored in the receive buffer. Once the receive buffer is full, the host is prohibited to send further data, and the CTD, therefore, can no longer be controlled by the host.

JP-A-2000-227843 discloses an interface device adapted to be mounted in a printer for connecting the printer to a host computer and for transferring command data from the host computer to the printer. The interface device comprises a first interface for detachably connecting the interface device to the host computer and for receiving command data from the host computer, and a second interface for detachably connecting the interface device to the printer, for sending said command data to the printer and for receiving status information from the printer indicating whether or not the printer is ready to receive data. The command data includes two distinct types of command data, real-time command data and non-real-time command data. The interface device can recognize real-time commands and send them to the printer even when the printer cannot receive data because, for example, the printer's receive buffer is full or the printer is off-line because its cover is open. When a normal command, i.e., a non-real-time command, is received, and the printer cannot receive the command data, the interface device stores the received command data in an internal memory.

A communication terminal device and a method of processing received data in the device in accordance with the pre-characterizing portion of claims 1 and 7 are known from EP-A-0 769 737 already mentioned before. This document discloses a printer capable of receiving and processing real-time commands. To this end the printer has two command interpreters. A first one receives all incoming data, passes them to a receive buffer and looks for real-time commands among the data. If it finds a real-time command that command is executed immediately irrespective of other commands that may be waiting already for execution in the receive buffer. The second command interpreter reads the data from the receive buffer in the order they were written therein and executes non-real time commands among the read data. When the printer is off-line the second command interpreter stops reading and interpreting data in the receive buffer which causes the problems explained above because no data are removed from the receive buffer during this period.

EP 0 811 947 A1 discloses a printer that, like the one of EP-A-0 769 737, has two command interpreters, one for real-time commands and another one for "normal" commands. Real-time commands are processed with priority whereas all other commands are queued in the receive buffer and processed in the FIFO order. Real-time commands are, inter alia, used for status requests and allow a host computer to be informed about the status of a printer even when printing is halted due to some error in the printer.

An object of the present invention is to provide a communication terminal device and a method of processing received data in the device that allow to prevent loss of receive buffer functionality as a result of received data accumulating in the receive buffer.

This object is achieved with a communication terminal device as claimed in claim 1 and a method as claimed in claim 7. Preferred embodiments of the invention are subject-matter of the dependent claims.

According to the invention, data stored in the receive buffer are continued to be interpreted and then removed from the receive buffer, even when the proper operation of a CTD has stopped due to an error, for example. The interpreted data are stored so that when a command among the interpreted data cannot be executed immediately because the CTD is currently disabled, the requested operation will be performed after CTD resumed its proper operation.

Where the CTD is a printer, for example, the received data are interpreted even when the proper printer operation is temporarily stopped. Action commands in the interpreted data that require a subsequent mechanical operation to complete are stored in an action buffer, and print data is stored in a print buffer in a format enabling the data to be printed directly from the print buffer. Processing data in the receive buffer therefore continues even while printer operation is stopped. The receive buffer will therefore not become full, and control requests from the host can be more flexibly handled.

Furthermore, because print data continues to be readied in the print buffer while printer operation is paused, processing can continue rapidly once the printer recovers from whatever caused it to stop operating. In particular, because data is already buffered in the print buffer when the printing operation requires printing plural consecutive lines, plural lines can be simultaneously printed immediately after printer operation is re-enabled.

Other objects and attainments together with a fuller understanding of the invention will become apparent and appreciated by referring to the following description of preferred embodiments taken in conjunction with the accompanying drawings in which:
- Fig. 1: shows an example of a CTD to which the present invention can be applied;
- Fig. 2: is a function block diagram of a POS system for describing the basic configuration of a first embodiment of the present invention;
- Fig. 3: is a block diagram of a typical configuration of a control circuit for achieving the functions of the first embodiment shown in Fig. 2;
- Fig. 4: is a conceptual illustration of how data received from the host 90 is processed through command interpretation after being stored in the receive buffer 32;

- Fig. 5: is a flow chart for describing the operation of the first embodiment of the present invention; and
- Fig. 6: is a function block diagram of a second embodiment of the present invention.

As mentioned before, this invention can be applied in various types of CTDs. The embodiments of the invention described below refer to a printer as one example of such CTD. Printers, which are widely used as terminal printers in ATMs, POS terminals, kiosk terminals, etc., typically handle a large number of status flags and exchange a large amount of data with the host.

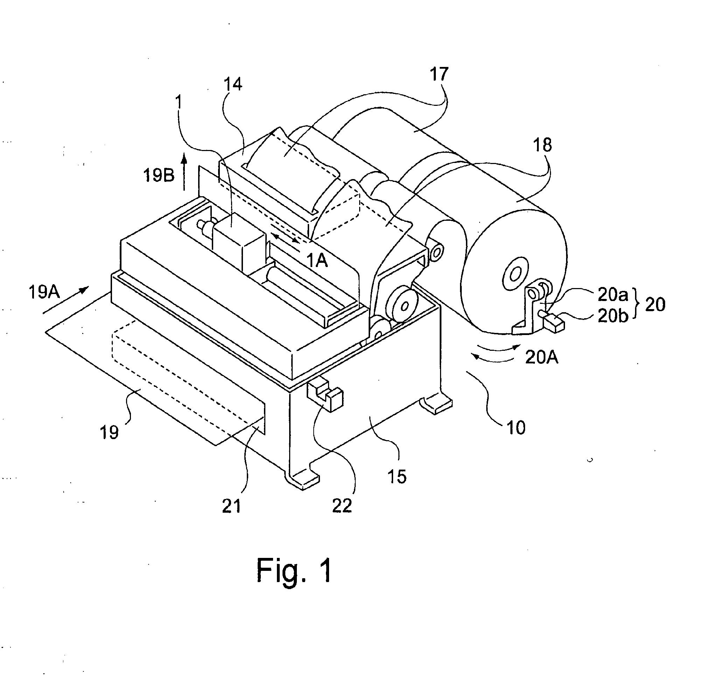

Fig. 1 shows such a printer for a POS system. This printer 10 prints on print media such as slip forms 19, journal paper 18, and receipt paper 17. Slip forms 19 are cut-sheet forms of various shapes. When a slip form 19 is inserted in the direction of arrow 19A into an insertion opening 21 at the front of the printer 10, a paper detector (not shown) detects the slip form, which is then conducted to a print head 1 through a paper transportation path inside a printer case 15. The print head 1 then travels sideways in the direction of arrows 1A to print as the slip form 19 is advanced further in the direction of arrow 19B and eventually ejected. Print head 1 may be a wire dot print head, a thermal print head, an ink-jet print head, or even a line print head, in which latter case the print head would not be required to move in the direction of arrow 1A because it extends across the whole width of the paper to be printed.

Both journal paper 18 and receipt paper 17 are continuous paper (sometimes referred to as endless paper), in this exemplary printer they are roll paper supplied from a respective paper roll. Journal and receipt paper 17, 18 is supplied to the print head 1 through the printer case 15 in a direction opposite to the transportation direction of the slip forms 19. After receipt data is printed on receipt paper 17 the latter is guided to a cutter unit 14 whereby the receipt paper 17 is cut so that a receipt can be given to the customer. Specific journal data to be retained by the store is printed on journal paper 18, which is then taken up and stored on a roll by a take-up device not shown.

A near-end detector 20 is provided for each of the journal and receipt paper rolls to detect when the respective roll is nearly depleted. The near-end detector 20 has a detection lever 20a that is biased against a side of the roll as shown in Fig. 1, and a switch 20b that is turned on and off by the detection lever 20a. When the end of the roll approaches and the outer diameter of the roll thus becomes sufficiently small, detection lever 20a swings in the direction of arrow 20A toward the center of the roll, thus causing switch 20b to turn off. This makes it possible to detect that the end of the paper on the roll is approaching.

Printer case 15 has a cover (not shown). The cover is closed except when receipt paper 17 or journal paper 18 is being replenished, and is closed while the printer is printing. A cover detector 22 is disposed on the printer case 15 for detecting cover opening and closing, so that when the cover is open the printer 10 automatically assumes a hold state during which a process such as interrupting printing is accomplished.

### First Embodiment

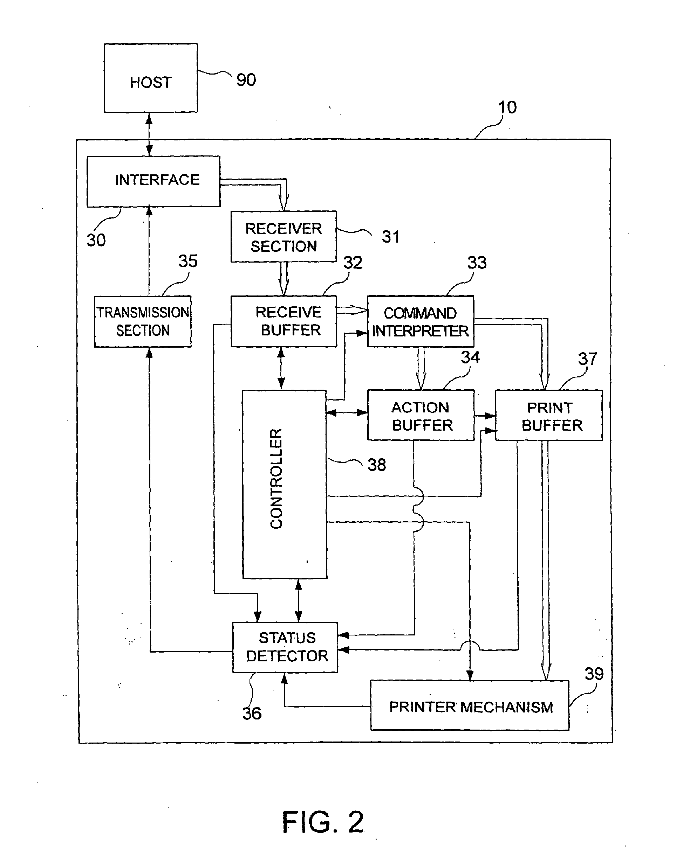

A first embodiment of the present invention is described next with reference to Fig. 2. Fig. 2 is a function block diagram illustrating a host 90 and a printer 10 of a POS system. The host 90 controls the overall operation of the POS system in addition to controlling the operation of various CTDs, including printer 10, that form part of the POS system by means of data communication between the host and the respective CTDs. To simplify the following explanation of the invention, this embodiment is described with reference to one CTD only, namely the printer 10.

The printer 10 is controlled by control commands and print data sent from the host 90 to the printer 10. The host 90 can be a general purpose personal computer. The host 90 must confirm the status of printer 10 in order to control the printer 10, and the printer 10 can return status information to the host 90 in response to a status request from the host 90.

The host 90 and printer 10 are typically connected by way of a serial communications port driver (RS-232C), for example. Printer control commands and print data sent from the host 90 are received by a receiver section 31 through an interface 30 in printer 10. The received data is stored in a receive buffer 32. Data stored in the receive buffer is then interpreted in the FIFO manner.

A command interpreter 33 interprets the received data and also performs a set-up process in preparation for running the process corresponding to the received data. For example, if print data is received, corresponding printing data is stored in a print buffer 37. Note that print data received from the host includes character codes and bitmap data. The printing data in the print buffer are typically, not necessarily, bitmap data. In this text the term "print data" refers to data as received, whether character code or bitmap data, while the term "image data" refers to data as stored in the print buffer, whether character code or bitmap data. If a command, for example a font style command, is received that can be processed without requiring any mechanical operation, corresponding information, e.g. the font style information, provided by the command is stored in the memory of a controller 38 when the command is interpreted. However, if a print command, paper cutting command, or other command requiring some mechanical operation is received, the command is interpreted and then stored in an action buffer 34. The data read from the receive buffer and interpreted by the command interpreter are deleted in the receiver buffer to make space for new data. As will be appreciated by those skilled in the art, "delete" does not necessarily mean the data is actually removed but only means that the space in the receive buffer occupied by this data is made available for new data to be stored. If the receive buffer is implemented as a ring buffer, for instance, data is easily "deleted" by changing pointers that point to the start and end of the "undeleted" data in the buffer. As long as the printer is in its on-line state, a command stored in action buffer 34 can be executed immediately. If the printer in its off-line state, however, the commands in the action buffer cannot be executed immediately but are kept for later execution when the printer has returned to the on-line state.

In other words, the command interpreter 33 prevents data from accumulating in the receive buffer by interpreting data in the receive buffer 32 so that a first kind of commands are executed and a second kind of commands are stored in the action buffer 34 after accomplishing the set-up process appropriate to the command. The first kind of commands includes commands, such as the font style command mentioned above, that can be executed even if the printer is in the off-line state due to an error or other reason. The second kind of command includes commands that cannot be executed while the printer is in the off-line state, for instance, because they require some mechanical operation which the printer may not be able to perform.

When the printer 10 was off-line and returns to the on-line state in which it can perform its proper operation, i.e., the printing operation, command information stored in the action buffer 34 is read out by the controller 38 and the corresponding printing or other operation is then performed. The command information stored in the action buffer 34 can be stored either as sent from the host 90, or can be stored after it has been converted for internal processing by the printer 10.

If the data sent from the host is print data, a print command, defined as such on the printer side, is stored in the action buffer 34 to accomplish a printing operation. The stored print command must contain information identifying which of the image data stored in the print buffer 37 is to be printed by this print command. The controller 38 reads the content of the action buffer 34 in the FIFO sequence. If a print command is detected, the controller 38 controls the print buffer 37 and printer mechanism 39 so that the printer mechanism 39 prints the correlated image data stored in the print buffer 37.

A status detector 36 is connected to and detects and stores the status of the printer mechanism 39, the receive buffer 32, and the action buffer 34, and sends this status information to the host 90 as requested by way of a transmission section 35 and interface 30.

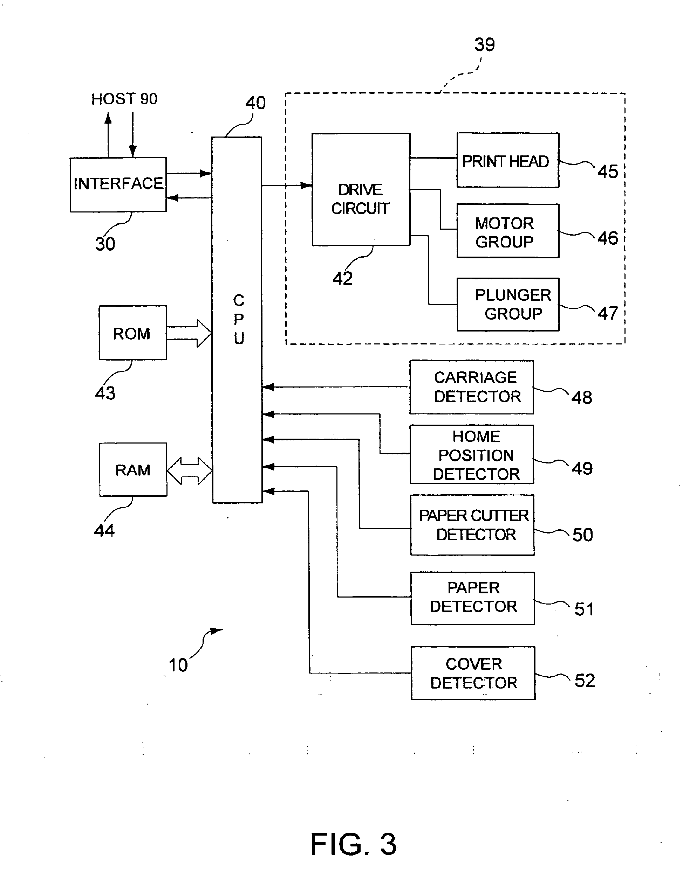

Referring now to Fig. 3, the basic configuration of a control circuit achieving the functions of the first embodiment will be explained.

The above-noted printer mechanism 39 comprises print head 45, motor group 46, plunger group 47, and drive circuit 42 for driving the components 45 to 47. The printer mechanism 39, a carriage detector 48, a home position detector 49, an cutter detector 50, a paper detector 51, a cover detector 52, the interface 30, a ROM 43 and a RAM 44 are all connected to a CPU 40. Paper cutter errors, cover open errors, and other errors can be detected using these various detectors 48 to 52.

ROM 43 stores data and software (firmware), i.e., control programs for execution by the CPU 40 to accomplish the functions of the various parts shown in Fig. 2. The CPU 40 reads the program code from ROM 43 and carries it out.

RAM 44 functions as receive buffer 32, action buffer 34, print buffer 37, and as a temporary working memory. As will be understood by one skilled in the art, these buffers 32, 34, 37 are not limited to a RAM, and can be achieved using registers or non-volatile memories, for example. Data communication with the host 90 is accomplished by way of the interface 30.

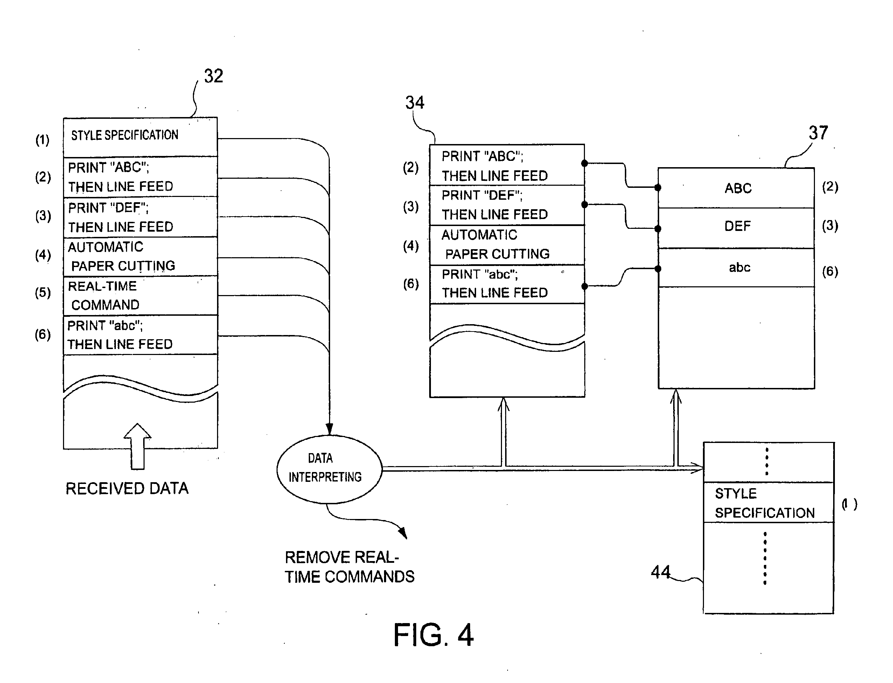

Fig. 4 conceptually illustrates how data received from the host 90 and stored in receive buffer 32 is processed by way of the command interpreter 33.

Let us assume below that data is received from the host 90 in the following order: (1) a font style command, (2) a command for printing "ABC" followed by a line feed, (3) a command for printing "DEF" followed by a line feed, (4) a paper cutting command, (5) a real-time command (further described below), and (6) a command for printing "abc" followed by a line feed. Please note that the command for printing characters is actually the print data (character codes in this case) themselves plus a control code "LF" (line feed) following the print data and terminating the command.

The command interpreter 33 then reads and interprets the commands in the sequence (1) through (6), that is, in the FIFO sequence. When command (1) is read from receive buffer 32, it is recognized as a font style specification. In this case the command interpreter sets the style information in memory in conjunction with the following image data. Command (1) is then removed from receive buffer 32 at this stage.

When command (2) is read and interpreted, it is recognized as a command requiring printing and a line feed. In this case the print data ("ABC") is processed according to the style information in RAM 44 and a print image corresponding to the print data is developed and stored as image data in the print buffer 37, and then operating information requiring a printing operation and a line feed operation is stored in the action buffer 34 for later execution. As noted above, the command information corresponding to the command (2) and image data corresponding to "ABC" in the print buffer 37 are stored with a correlation therebetween. More precisely, to print the image data, a function routine which is part of the code stored in ROM 43, is invoked with a parameter that specifies the area in the print buffer 37 that holds the associated image data, and executes printing of this image data on a recording medium, such as receipt paper, followed by a line feed operation. Storing the command information in the action buffer 34 means a corresponding function call is registered in the action buffer 34 with the start and end addresses of the area in print buffer 37 that stores the image data representing "ABC" as parameter. When this process ends, the command (2) is removed from the receive buffer 32. Note that this step of removing data from the receive buffer 32 is performed for each received data processed in this way one after the other, and further mention thereof is thus omitted below.

Command (3) is likewise read from the receive buffer 32 and interpreted to similarly store the print image data and command information in the print buffer 37 and action buffer 34, respectively. Command (4) is then read and interpreted. Because the process specified by command (4) is cutting the paper, only the corresponding command information is stored in the action buffer 34 (i.e., no data is stored in the print buffer 37). For this case another function routine is provided which has no parameter and executes the cutting operation, and a function call to this function is registered in the action buffer 34.

Command (5) stored in receive buffer 32 is a real-time command. When the command interpreter detects a real-time command, the real-time command data is cancelled.

Command (6) is a print command similar to commands (2) and (3), and is therefore handled in the same way.

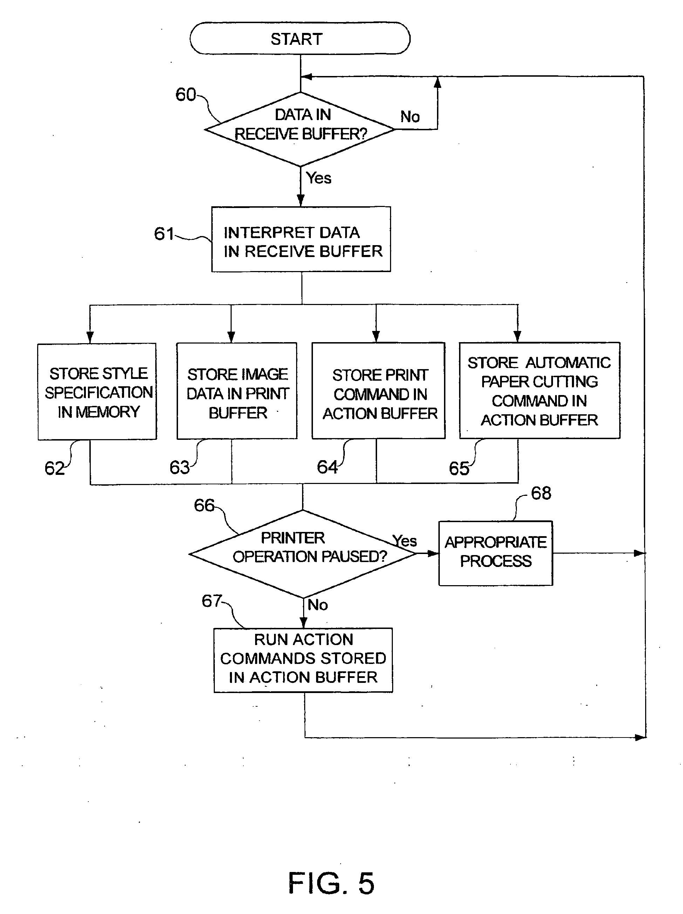

These operations are further described below with reference to the flow chart shown in Fig. 5.

When this process starts, command interpreter 33 checks if any data is stored in receive buffer 32 (step 60). If there is, it interprets the data in the FIFO order (step 61), sets any style information according to the interpreted data (step 62), develops print data to image data in the print buffer 37 (step 63), stores print command information in the action buffer 34 (step 64), or stores cutting command information in the action buffer 34 (step 65) as appropriate. It will be appreciated by one skilled in the art that these steps 62 to 65 are shown by way of example only, and the processes actually performed will vary according to the command(s) received.

Whether printing, the proper operation of the printer, is temporarily disabled is then determined (step 66). If the printer is on-line and operating, the command information stored in the action buffer 34 is read out and then a corresponding operation is performed (step 67). The temporally disabled state of the printer is established in, for example, its off-line state.

If printing is disabled, a specific process is performed depending on what prevents the printer from printing (step 68). If a paper jam causes the printer to go off-line, for example, the paper transportation motor might be stopped and an LED indicator turned on, and/or the status stored in a specific storage area. When the specific process ends, the processing of data in the receive buffer, if any, is performed (step 60) irrespective of the printer being disabled. As soon as the printer recovers from the disabled state and is capable to resume printing, the command information in action buffer 34, if any, is executed.

### Second embodiment

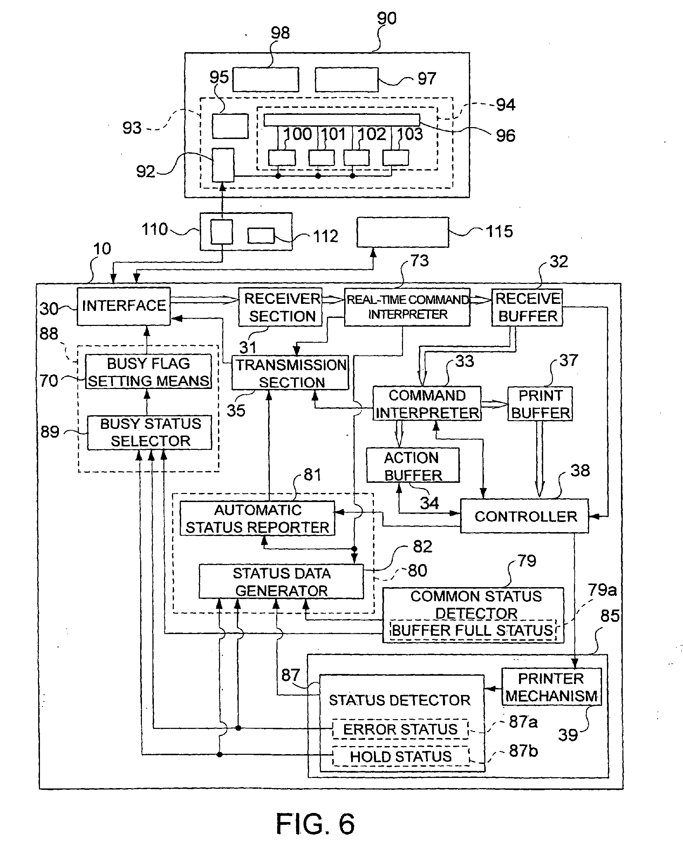

Fig. 6 shows an exemplary POS system comprising a personal computer (PC) as a host 90, and a printer 10 according to a second embodiment as another example of a CTD according to the invention . A customer display 110 and a cash drawer 115 are electrically connected by way of the serial communications port (RS-232C) driver 92 of the PC 90 in this POS system.

Further, the PC 90 is connected to the printer 10 by way of an RS-232C interface through the customer display 110 for sending and receiving data therebetween. More particularly, the customer display 110 is connected to the PC 90, the printer 10 is connected to the customer display 110 and the cash drawer 115 is connected to the printer 10. The PC 90 controls all three devices by sending specific commands to the customer display 110. The customer display 110 has a pass-through function and passes all data from the host not intended for the customer display to the printer; the display processor 112 processes commands and display data from the PC only when the customer display 110 is selected by a predetermined command from the PC. The printer 10 has a similar function, and processes commands and print data from the PC only when selected while other data are passed through to the cash drawer 115.

The DTR signal from customer display 110 is input to the CS signal terminal of the PC 90 to avoid conflicting with the DTR signal from the printer 10. The customer display 110 does not send status information to the PC 90, and there is, therefore, no conflict with status data from the printer 10.

Being thus connected, an operating system (OS) 93 of the host PC 90 comprises, in addition to the serial port driver 92, a POS OS 94 and a basic OS 95 for controlling the keyboard, display, and other common personal computer components, and application software 97 for controlling the POS devices via these OS components.

The POS OS 94 comprises: a receipt printing driver 100 used for making the printer 10 print on receipt paper, journal paper, or other continuous paper; a slip printing driver 101 for printing on slip forms; a customer display driver 102 for controlling the customer display 110; a cash drawer driver 103 for controlling the cash drawer 115; and further a POS control OS 96 for collectively controlling these device drivers.

The basic OS 95 and POS OS 94 facilitate operation of the POS application software 97 and other application software 98 such as spreadsheets run on the host 90.

When data is received through the interface 30 of printer 10, an interrupt is generated and the CPU (not shown in Fig. 6) of the printer executes a corresponding interrupt process, and receiver section 31, which is realized by that interrupt process, reads data from the interface 30. Data captured from the interface 30 is stored in the receive buffer after passing through a real-time command interpreter 73 during the same interrupt process. If the real-time command interpreter 73 detects a real-time command in the data sent from receiver section 31, the specific process indicated by the real-time command is executed with priority over any process issued in accordance with non-real time commands stored in the receive buffer 32.

Data that have passed the real-time command interpreter 73 and were stored in the receive buffer 32 during the interrupt process are then read and interpreted by command interpreter 33 in the FIFO order. If a command is detected, a process preparing for command execution is run by the controller 38, while any print data is stored as image data in the print buffer 37, i.e., in a format enabling the data to be printed.

Control commands among the data interpreted by the command interpreter 33 are modified to command information and then stored in the action buffer 34 just as this is the case in the first embodiment (note that a few commands, called first type commands above, that can be executed immediately need not be and are not stored in the action buffer). If such command information represents a command for printing, it is correlated with corresponding image data stored in the print buffer 37 as explained for the first embodiment. While the printer is in its on-line state, the command information stored in the action buffer 34 is read and sequentially executed by the controller 38 in the FIFO order. The controller controls the print processor 85 according to the command information read from the action buffer 34, and sends the image data stored in the print buffer 37 to the print processor 85 to control the print processor and to achieve printing.

The controller 38 has functions for controlling the print processor 85, managing image data, and monitoring the status of the various parts of printer 10. The results are output to a common status detector 79, which is part of the status detector 36.

For example, if the receive buffer 32 is nearly full or the printer temporally stops its operation waiting for a slip form 19 to be inserted, the corresponding status is reported to the common status detector 79. If the printer mechanism 39 changes, for example, to a hold state in which data processing is paused because the printer cover is open, a paper jam causes a printer error, or a roll paper near-end state is detected, the print processor 85 passes the status information to a printer mechanism status detector 87, which is part of the status detector 36.

The status information detected by the common status detector 79 and that detected by the printer mechanism status detector 87 is supplied to a status data generator 82 of a status transmitter 80. The status transmitter 80 has a function for sending status information relating to the printer 10 to the host 90 by means of an automatic status reporter 81. This status information includes, for example, the receive buffer status and status information of printer mechanism 39 accumulated in the status data generator 82. Under the control of the controller 38, the automatic status reporter 81 sends status data in response to a change in one or more particular status . The one or more status that trigger automatically sending the status information can be selected by a specific command from the host.

Status data output from the automatic status reporter 81 is supplied through transmission section 35 to interface 30, and forwarded to the RS-232C port driver 92 of the host. The status information is then relayed to the POS application software 97 by the POS OS 94, which includes a printer driver. The POS application software 97 then selects the process appropriate to the status of printer 10 so that it can control the printer 10 accordingly.

By providing such a status transmitter 80, status data is sent to the POS application software 97 when there is a change in a particular status of the printer mechanism or the printer 10. The application can therefore determine the overall status of the printer 10. Furthermore, because status data is reported only when there is a change in status, the processing load associated with status data sending and receiving is reduced on both the host and printer sides. Throughput can therefore be improved.

Buffer full status 79a detected by common status detector 79 and indicating that the receive buffer 32 is full, and error cause (error status) 87a and hold state cause (hold status) 87b from the printer mechanism status detector 87, are also supplied to a busy status selector 89 of a communication enabling unit 88. If buffer full status 79a, error status 87a, or hold status 87b is detected, a busy flag setting section 70 outputs a busy signal to the interface 30 to notify the host 90 that data transmission is prohibited. This prevents the loss of data sent from the host because it cannot be stored in the receive buffer 32 of the terminal printer 10.

More specifically, the RS-232C standard uses the DTR signal to achieve a busy signal function. The host-side RS-232C port driver 92 or printing driver 100, 101 sends data only when the DTR signal is active, and stops sending data when the printer 10 is in the off-line or buffer-full state and the DTR signal is thus inactive.

A configuration in which the POS application software 97 outputs to the printer 10 a command for confirming the status, or a command requesting more detailed status information, when the near-end detector status or other monitored status changes and status data is therefore reported is also possible. Normally, data received by the printer is accumulated in the receive buffer 32 in the order received, and command interpreting and processing occur in the order stored. Therefore, if a large amount of previous data is stored, it can take quite some time before the required command process is started.

Real-time commands are interpreted and processed by the real-time command interpreter 73 before being transferred to the receive buffer 32, and, thus, their execution is prevented from being delayed. Real-time commands are executed with no relationship to the order of any data or commands waiting in the receive buffer 32 for processing. Thus the host-side application can immediately obtain status information from the printer and execute a specified process by issuing the real-time commands, thus enabling error recovery and other processes.

However, when an error occurs with the printer or the printer enters a hold state, the busy status selector 89 of the communication enabling unit 88 determines that the printer is busy and operation is disabled. For this reason the communication enabling unit 88 sets the DTR signal inactive. The host OS 93 then pauses sending data to the printer 10 in response to the inactive DTR signal. The host OS 93 thus prevents a host-side POS application 97 from sending any command, including a real-time commands, to the printer 10.

Even real-time commands are thus disabled when a busy signal is output despite the POS application software 97 being adapted to use real-time commands and the printer 10 has a function for interpreting and executing real-time commands.

The busy status selector 89 of the communication enabling unit 88 in this exemplary embodiment of the present invention is therefore able to select factors causing busy signal output so that a busy signal is output only when a buffer full state or other major problem occurs.

By thus limiting the reasons for busy signal output to specific causes such as a buffer full state, the degree of freedom of the host application 97 is greatly improved but would not be sufficient without the additional function of the action buffer 34 provided in accordance with the present invention. When a paper jam occurs, for example, the application 97 repeatedly outputs numerous real-time commands to request a detailed status report and to confirm a change in status, for example. Certain print data may also be sent in advance of the printing operation so that printing can begin quickly after the paper jam is removed. There are also cases in which a great amount of data is already stored in the receive buffer at the time the paper jam occurs.

A POS system similar to that shown in Fig. 6 but not having the action buffer 34 and the related functions is known from JP-A-10-333856. In this prior art, data in the receive buffer are not processed when, e.g., a paper jam occurs, so that the data in the receive buffer remain in the buffer without being interpreted. The receive buffer can, therefore, soon become filled with real-time commands, for example. When the buffer becomes full, a busy signal is output as described above. This causes the host OS 93 to block sending data, and the application 97 is unable to handle the error.

In the second embodiment of the present invention this problem is eliminated because interpretation of data in the receive buffer is continued as described above even if printer 10 stops printing because of a paper jam or other error. Except for real-time commands, command information based on the interpreted commands is stored in the action buffer 34 with a correlation to corresponding image data, if any. All data that have been interpreted by command interpreter 33 as well as real-time commands are removed from the receive buffer allowing the receive buffer to receive new data from the host. The command information stored in the action buffer 34 is read and executed in the stored sequence as soon as the error or other printing disabling condition is resolved. Command interpreting can be set to continue for as long as storage space remains in the action buffer 34.

Command interpretation in this exemplary embodiment continues irrespective of the status of printer 10, and real-time commands are not accumulated in the receive buffer. The host 90 can therefore send numerous real-time commands without filling the receive buffer, and the degree of freedom of host application software can be greatly improved beyond the improvement provided by the prior art of JP-A-10-333856.

Furthermore, because image data may already have been prepared for printing by the time the error state or off-line state is corrected, printing the largest number of lines printable by the print head can begin at the same time that printing starts.

The control-related functions of both the above-described first and second embodiments can be achieved using CPU 40, ROM 43, RAM 44, and so forth as shown in Fig. 3. In this case the control process can be stored on a computer-readable data storage medium, such as a ROM, a CD-ROM, or floppy disk, and read by CPU 40 to create a load module. The control process can also be stored on the data storage medium in load module form so that it can be read directly therefrom and run, or copied therefrom and run.

## Claims

1. A communication terminal device comprising:
interface means (30) for performing data communication with a host device (90);
first storage means (32) for storing data;
first data processing means (31) for storing in said first storage means (32) the data received by said interface means (30);
interpretation means (33) for reading said received data in said first storage means (32, 34, 37) in the order in which they were stored, and for interpreting the read data;
deletion means (38) for recovering the space in said first storage means (32, 34, 37) occupied by the received data read and interpreted by said interpretation means (33);
first control means (38) for controlling said communication terminal device (10) in accordance with the data interpreted by said interpretation means (33);
state detection means (48-52; 87) for detecting a predetermined state of the communication terminal device (10); and
means for interrupting the operation of said first control means (38) in response to said status detection means detecting the predetermined state,
**characterized by**
second data processing means (38) for storing control information corresponding to said interpreted data in second storage means (34, 37) in the order in which they were interpreted;
wherein said first control means (38) is adapted to control said communication terminal device (10) based on said control information stored in said second storage means (34, 37), and said interpretation means (33) is adapted to perform said reading and interpretation and said deletion means (38) is adapted to perform said recovering even while the operation of said first control means (38) is interrupted.

2. The device according to claim 1 implemented as a printer, wherein said control information comprises printing control information and printing data, and said second data processing means (38) is adapted to store the printing control information and the printing data separately from one another but correlated with one another.

3. The device according to claim 2, wherein said second storage means (34, 37) comprises a first area (34) for storing the printing control information and a second area (37) for storing the printing data, and said second data processing means (38) is adapted to add addresses within the second area (37) to said printing control information stored in the first area (34) to establish said correlation.

4. The device according to any one of claims 1 to 3, further comprising first detection means for detecting predetermined data among the interpreted data interpreted by said interpretation means (33) wherein said second data processing means (38) is capable of storing
said control information corresponding to said Interpreted data unless the control information is said predetermined data detected by said first detection means.

5. The device according to claim 4, further comprising:
second detection means (73) for detecting said predetermined data among the received data before the received data are stored in said first storage means (32); and
second control means (80) responsive to said second detection means (73) detecting said predetermined data for controlling said communication terminal device (10) in accordance the detected predetermined data, operation by said second control means (80) being given priority over operation by said first control means (38).

6. The device according to claim 5, wherein said predetermined data represents commands causing the second control means (80) to send status data of said communication terminal device (10) to said host device (90).

7. A method of processing data in a communication terminal device communicating with a host device (90), comprising the steps of:
a) receiving data from the host device (90);
b) storing the data received in step a) in a first storage means (32);
c) reading the received data stored in step b) from the first storage means (32) in the order in which they were stored therein;
d) interpreting the data read in step c);
e) deleting the received data read in step c) and interpreted in step d) so as to recover the space in said first storage means (32, 34, 37) occupied this data;
f) controlling the communication terminal device (10) based on the data interpreted in step d):
g) detecting a predetermined status of said communication terminal device (10); and
h) interrupting the execution of step f) in response to the predetermined data being detected in step g);
**characterized by** the step of
i) storing, in a second storage means (34, 37) control information corresponding to the interpreted data resulting from step d) in the order in which the data are interpreted;
wherein step f) comprises controlling the communication terminal device (10) based on said control information stored in step l), and wherein steps c), d). e) and i) are continued to be performed while the processing in step f) is interrupted.

8. A method according to claim 9 applied to a printer as said communication terminal device (10), wherein said control information comprises printing control information and printing data, and in step i) comprises storing the printing control information and the printing data separately from one another but correlated with one another.

9. A method according to claim 8, wherein said step l) comprises the steps of:
i1) storing the printing data;
i2) adding address information defining the location of the stored printing data in said second storage means (34, 37) to the printing control information related to the printing data; and
i3) storing the printing control information and the address information.

10. A method according to any one of claims 7 to 9 comprising the further step of j) detecting predetermined data among the interpreted data resulting from step d); wherein step i) comprises storing said control information corresponding to said Interpreted data unless the control information is said predetermined data if detected in step j).

11. A method according to claim 10, further comprising the steps of:
k) detecting said predetermined data among the received data before the received data are stored in said step b): and
l) controlling said communication terminal device (10) in accordance with the predetermined data detected in said step k);
wherein step l) Is performed with a higher priority than step f).

12. A method according to claim 11, wherein said step I) comprises sending status data of said communication terminal device (10) to said host device (90) according to the predetermined data.

13. A computer program product comprising a control program adapted to implement the method set forth in any one of claims 7 to 12 when executed in a program-controlled communication terminal device (10).

## Patentansprüche

1. Kommunikationsendgerätvorrichtung, die aufweist:
Schnittstellenmittel (30) zum Durchführen von Datenkommunikation mit einer Hostvorrichtung (90);
erste Speichermittel (32) zum Speichern von Daten;
erste Datenverarbeitungsmittel (31) zum Speichern in dem ersten Speichermittel (32) der Daten, die von dem Schnittstellenmittel (30) empfangen werden;
Interpretationsmittel (33) zum Lesen der empfangenen Daten in dem ersten Speichermittel (32, 34, 37) in der Reihenfolge, in der sie gespeichert wurden, und zum Interpretieren der gelesenen Daten;
Löschungsmittel (38) zum Wiedergewinnen des Platzes in dem ersten Speichermittel (32, 34, 37), der durch die empfangenen Daten belegt wird, die durch das Interpretationsmittel (33) gelesen und interpretiert werden;
erste Steuerungsmittel (38) zum Steuern der Kommunikationsendgerätvorrichtung (10) in Übereinstimmung mit den Daten, die von dem Interpretationsmittel (33) interpretiert werden;
Zustandserfassungsmittel (48-52; 87) zum Erfassen eines vorgegebenen Zustands der Kommunikationsendgerätvorrichtung (10); und
Mittel zum Unterbrechen des Betriebs des ersten Steuerungsmittels (38) in Reaktion auf das Erfassen des vorgegebenen Zustands durch das Zustandserfassungsmittel,
**gekennzeichnet durch**
zweite Datenverarbeitungsmittel (38) zum Speichern von Steuerungsinformation, die den interpretierten Daten entspricht, in einem zweiten Speichermittel (34, 37) in der Reihenfolge, in der sie interpretiert wurden;
wobei das erste Steuerungsmittel (38) ausgebildet ist, die Kommunikationsendgerätvorrichtung (10) basierend auf der Steuerungsinformation zu steuern, die in dem zweiten Speichermittel (34, 37) gespeichert ist, und das Interpretationsmittel (33) ausgebildet ist, das Lesen und die Interpretation durchzuführen, und das Löschungsmittel (38) ausgebildet ist, die Wiederherstellung durchzuführen, auch während der Betrieb des ersten Steuerungsmittels (38) unterbrochen wird.

2. Vorrichtung gemäß Anspruch 1, implementiert als ein Drucker, wobei die Steuerungsinformation Drucksteuerungsinformation und Druckdaten aufweist, und das zweite Datenverarbeitungsmittel (38) ausgebildet ist, die Drucksteuerungsinformation und die Druckdaten getrennt voneinander, aber korreliert zueinander zu speichern.

3. Vorrichtung gemäß Anspruch 2, wobei das zweite Speichermittel (34, 37) einen ersten Bereich (34) zum Speichern der Drucksteuerungsinformation und einen zweiten Bereich (37) zum Speichern der Druckdaten aufweist, und das zweite Datenverarbeitungsmittel (38) ausgebildet ist, Adressen in dem zweiten Bereich (37) zu der Drucksteuerungsinformation hinzuzufügen, die in dem ersten Bereich (34) gespeichert ist, um die Korrelation herzustellen.

4. Vorrichtung gemäß einem der Ansprüche 1 bis 3, die weiter aufweist erste Erfassungsmittel zum Erfassen vorgegebener Daten unter den interpretierten Daten, die von dem Interpretationsmittel (33) interpretiert werden, wobei das zweite Datenverarbeitungsmittel (38) die Steuerungsinformation speichern kann, die den interpretierten Daten entspricht, außer bei der Steuerungsinformation handelt es sich um die vorgegebenen Daten, die von dem ersten Erfassungsmittel erfasst werden.

5. Vorrichtung gemäß Anspruch 4, die weiter aufweist:
zweite Erfassungsmittel (73) zum Erfassen der vorgegebenen Daten unter den empfangenen Daten, bevor die empfangenen Daten in dem ersten Speichermittel (32) gespeichert werden; und
zweite Steuerungsmittel (80) in Reaktion darauf, dass das zweite Erfassungsmittel (73) die vorgegebenen Daten erfasst, zum Steuern der Kommunikationsendgerätvorrichtung (10) in der Übereinstimmung mit den erfassten vorgegebenen Daten, wobei einer Operation durch das zweite Steuerungsmittel (80) Priorität über eine Operation durch das erste Steuerungsmittel (38) gegeben wird.

6. Vorrichtung gemäß Anspruch 5, wobei die vorgegebenen Daten Befehle repräsentieren, die das zweite Steuerungsmittel (80) veranlassen, Zustandsdaten der Kommunikationsendgerätvorrichtung (10) an die Hostvorrichtung (90) zu senden.

7. Verfahren zum Verarbeiten von Daten in einer Kommunikationsendgerätvorrichtung, die mit einer Hostvorrichtung (90) kommuniziert, das die Schritte aufweist:
(a) Empfangen von Daten von der Hostvorrichtung (90);
b) Speichern der Daten, die in Schritt a) empfangen werden, in einem ersten Speichermittel (32);
c) Lesen der empfangenen Daten, die in Schritt b) gespeichert werden, aus dem ersten Speichermittel (32) in der Reihenfolge, in der sie darin gespeichert wurden;
d) Interpretieren der Daten, die in Schritt c) gelesen werden;
e) Löschen der empfangenen Daten, die in Schritt c) gelesen werden und in Schritt d) interpretiert werden, zum Wiedergewinnen des Platzes in dem ersten Speichermittel (32, 34, 37), der durch diese Daten belegt wird;
f) Steuern der Kommunikationsendgerätvorrichtung (10) basierend auf den Daten, die in Schritt d) interpretiert werden;
g) Erfassen eines vorgegebenen Zustands der Kommunikationsendgerätvorrichtung (10); und
h) Unterbrechen der Ausführung von Schritt f) in Reaktion auf das Erfassen der vorgegebenen Daten in Schritt g);
**gekennzeichnet durch** den Schritt
i) Speichern, in einem zweiten Speichermittel (34, 37), von Steuerungsinformation, die den interpretierten Daten entspricht, die aus Schritt d) resultieren, in der Reihenfolge, in der die Daten interpretiert werden;
wobei Schritt f) aufweist ein Steuern der Kommunikationsendgerätvorrichtung (10) basierend auf der Steuerungsinformation, die in Schritt i) gespeichert wird, und wobei die Schritte c), d), e) und i) weiter durchgeführt werden, während die Verarbeitung in Schritt f) unterbrochen ist.

8. Verfahren gemäß Anspruch 9, angewendet auf einen Drucker als die Kommunikationsendgerätvorrichtung (10), wobei die Steuerungsinformation Drucksteuerungsinformation und Druckdaten aufweist, und der Schritt i) aufweist ein Speichern der Drucksteuerungsinformation und der Druckdaten getrennt voneinander, aber korreliert zueinander.

9. Verfahren gemäß Anspruch 8, wobei der Schritt i) die Schritte aufweist:
i1) Speichern der Druckdaten;
i2) Hinzufügen von Adressinformation, die die Stelle der gespeicherten Druckdaten in dem zweiten Speichermittel (34, 37) definiert, zu der Drucksteuerungsinformation, die die Druckdaten betrifft; und
i3) Speichern der Drucksteuerungsinformation und der Adressinformation.

10. Verfahren gemäß einem der Ansprüche 7 bis 9, das den weiteren Schritt aufweist
(j) Erfassen von vorgegebenen Daten unter den interpretierten Daten, die aus Schritt d) resultieren;
wobei der Schritt i) aufweist ein Speichern der Steuerungsinformation, die den interpretierten Daten entspricht, außer bei den vorgegebenen Daten handelt es sich um die vorgegebenen Daten, wenn in Schritt j) erfasst.

11. Verfahren gemäß Anspruch 10, das weiter die Schritte aufweist:
k) Erfassen der vorgegebenen Daten unter den empfangenen Daten, bevor die empfangenen Daten in dem Schritt b) gespeichert werden; und
l) Steuern der Kommunikationsendgerätvorrichtung (10) in Übereinstimmung mit den vorgegebenen Daten, die in dem Schritt k) erfasst werden;
wobei Schritt l) mit einer höheren Priorität als Schritt f) durchgeführt wird.

12. Verfahren gemäß Anspruch 11, wobei der Schritt l) ein Senden von Zustandsdaten der Kommunikationsendgerätvorrichtung (10) an die Hostvorrichtung (90) gemäß den vorgegebenen Daten aufweist.

13. Computerprogrammprodukt, das ein Steuerungsprogramm aufweist, das ausgebildet ist zum Implementieren des Verfahrens gemäß einem der Ansprüche 7 bis 12, wenn in einer programmgesteuerten Kommunikationsendgerätvorrichtung (10) ausgeführt.

## Revendications

1. Dispositif de terminal de communication comprenant :
des moyens (30) d'interface pour effectuer une communication de données avec un dispositif (90) hôte ;
des premiers moyens (32) de mémorisation pour mémoriser des données ;
des premiers moyens (31) de traitement de données pour mémoriser dans les premiers moyens (32) de mémorisation les données reçus par les moyens (30) d'interface ;
des moyens (33) d'interprétation pour lire les données reçues dans les premiers moyens (32, 34, 37) de mémorisation dans l'ordre dans lequel elles ont été mémorisées et pour interpréter les données lues ;
des moyens (38) de suppression pour récupérer l'espace dans les premiers moyens (32, 34, 37) de mémorisation occupé par les données reçues, lues et interprétées par les moyens (33) d'interprétation ;
des premiers moyens (38) de commande pour commander le dispositif (10) de terminal de communication en fonction des données interprétées par les moyens (33) d'interprétation,
des moyens (48 à 52 ; 87) de détection d'état pour détecter un état déterminé à l'avance du dispositif (10) de terminal de communication ; et
des moyens d'interruption du fonctionnement des premiers moyens (38) de commande en réaction au moyen de détection de statut détectant l'état déterminé à l'avance,
**caractérisé par**
des deuxièmes moyens (38) de traitement de données pour mémoriser une information de commande correspondant aux données interprétées dans des deuxièmes moyens (34, 37) de mémorisation dans l'ordre dans lequel elles ont été interprétées ;
dans lequel les premiers moyens (38) de commande sont conçus pour commander le dispositif (10) de terminal de communication sur la base de l'information de commande mémorisée dans les deuxièmes moyens (34, 37) de mémorisation, et les moyens (33) d'interprétation sont conçus pour effectuer la lecture et l'interprétation et les moyens (38) de suppression sont conçus pour effectuer la récupération, même pendant que le fonctionnement des premiers moyens (38) de commande est interrompu.

2. Dispositif suivant la revendication 1 mis en oeuvre sous la forme d'une imprimante, dans lequel l'information de commande comprend une information de commande d'impression et des données d'impression, et les deuxièmes moyens (38) de traitement de données sont conçus pour mémoriser l'information de commande d'impression et les données d'impression séparément l'une de l'autre, mais d'une manière corrélée l'une à l'autre.

3. Dispositif suivant la revendication 2, dans lequel les deuxièmes moyens (34, 37) de mémorisation comprennent une première zone (34) pour mémoriser l'information de commande d'impression et une deuxième zone (37) pour mémoriser les données d'impression et les deuxièmes moyens (38) de traitement de données sont conçus pour ajouter des adresses dans la deuxième zone (37) à l'information de commande d'impression mémorisée dans la première zone (34) pour établir la corrélation.

4. Dispositif suivant l'une quelconque des revendications 1 à 3 comprenant, en outre, des premiers moyens de détection pour détecter des données déterminées à l'avance parmi les données interprétées par les moyens (33) d'interprétation, dans lequel les deuxièmes moyens (38) de traitement de données sont aptes à mémoriser l'information de commande correspondant aux données interprétées, à moins que l'information de commande soit les données déterminées à l'avance détectées par les premiers moyens de détection.

5. Dispositif suivant la revendication 4, comprenant, en outre :
des deuxièmes moyens (73) de détection pour détecter les données déterminées à l'avance parmi les données reçues avant que les données reçues soient mémorisées dans les premiers moyens (32) de mémorisation ; et
des deuxièmes moyens (80) de commande réagissant aux deuxièmes moyens (73) de détection détectant les données déterminées à l'avance pour commander le dispositif (10) de terminal de communication en fonction des données détectées déterminées à l'avance, le fonctionnement par les deuxièmes moyens (80) de commande ayant priorité sur le fonctionnement par les premiers moyens (38) de commande.

6. Dispositif suivant la revendication 5, dans lequel les données déterminées à l'avance représentent des instructions faisant que les deuxièmes moyens (80) de commande envoient des données de statut du dispositif (10) de terminal de communication au dispositif (90) hôte.

7. Procédé de traitement de données dans un dispositif de terminal de communication communiquant avec un dispositif (90) hôte, comprenant les stades dans lesquels :
a) on reçoit des données provenant du dispositif (90) hôte ;
b) on mémorise les données reçues au stade a) dans des premiers moyens (32) de mémorisation ;
c) on lit les données reçues mémorisées au stade b) dans les premiers moyens (32) de mémorisation dans l'ordre dans lequel elles y ont été mémorisées ;
d) on interprète les données lues au stade c) ;
e) on supprime les données reçues lues au stade c) et interprétées au stade d) de manière à récupérer l'espace dans les premiers moyens (32, 34, 37) de mémorisation occupé par ces données ;
f) on commande le dispositif (10) de terminal de communication sur la base des données interprétées au stade d) ;
g) on détecte un statut déterminé à l'avance du dispositif (10) de terminal de communication ; et
h) on interrompt l'exécution du stade f) en réaction aux données déterminées à l'avance qui y sont détectées au stade g) ;
**caractérisé par** les stades dans lesquels
i) on mémorise, dans des deuxièmes moyens (34, 37) de mémorisation, une information de commande correspondant aux données interprétées provenant du stade d) dans l'ordre dans lequel les données sont interprétées ;
dans lequel le stade f) comprend la commande du dispositif (10) de terminal de communication sur la base de l'information de commande mémorisée dans le stade i) et dans lequel on continue à effectuer les stades c), d), e) et i) alors que le traitement dans le stade f) est interrompu.

8. Procédé suivant la revendication 9 appliqué à une imprimante en tant que dispositif (10) de terminal de communication, dans lequel l'information de commande comprend une information de commande d'impression et des données d'impression et au stade i) on mémorise l'information de commande d'impression et les données d'impression séparément l'une de l'autre, mais d'une manière corrélée l'une à l'autre.

9. Procédé suivant la revendication 8, dans lequel le stade i) comprend les stades dans lesquels :
i1) on mémorise les données d'impression ;
i2) on ajoute une information d'adresse définissant l'emplacement de la donnée d'impression mémorisée dans les deuxièmes moyens (34, 37) de mémorisation à l'information de commande d'impression se rapportant aux données d'impression ; et
i3) on mémorise l'information de commande d'impression et l'information d'adresse.

10. Procédé suivant l'une quelconque des revendications 7 à 9, comprenant le stade supplémentaire, dans lequel
j) on détecte des données déterminées à l'avance parmi les données interprétées provenant du stade d) ;
dans lequel le stade i) comprend la mémorisation de l'information de commande correspondant à la donnée interprétée à moins que l'information de commande soit la donnée déterminée à l'avance détectée au stade j).

11. Procédé suivant la revendication 10, comprenant, en outre, les stades dans lesquels :
k) on détecte les données déterminées à l'avance parmi les données reçues avant que les données reçues soient mémorisées dans le stade b) ; et
l) on commande le dispositif (10) de terminal de communication en fonction des données déterminées à l'avance détectées dans le stade k) ;
dans lequel le stade l) est effectué avec une priorité plus grande que le stade f).

12. Procédé suivant la revendication 11, dans lequel le stade i) comprend l'envoi de données de statut du dispositif (10) de terminal de communication au dispositif (90) hôte suivant la donnée déterminée à l'avance.

13. Produit de programme informatique comprenant un programme de commande conçu pour mettre en oeuvre le procédé indiqué suivant l'une quelconque des revendications 7 à 12, lorsqu'il est exécuté dans un dispositif (10) de terminal de communication commandé par programme.
